# EUROPEAN PATENT APPLICATION

(11) **EP 4 656 498 A1**
(43) Date of publication of application: **03.12.2025**
(21) Application number: 24179046.8
(22) Date of filing: 30.05.2024
(51) Int. Cl.: B62D 15/02

(54) **STEERING ASSISTANCE OF A VEHICLE**

(71) Applicant: VOLVO TRUCK CORPORATION, 405 08 Göteborg (SE)
(72) Inventor: Östman, Bill, 436 57 Hovås (SE); Cider, Lennart, 441 95 Alingsås (SE)
(74) Representative: Valea AB

(57) **Abstract**

A computer system (600) comprising processing circuitry (602) configured to assist in steering a vehicle (1) travelling on a road (100) is provided. The processing circuitry (602) is further configured to obtain, as measured by one or more sensors (20) of the vehicle (1), an indication of one or more tracks (10) on the road (100). The processing circuitry (602) is further configured to obtain, a position of the vehicle (1) with respect to the one or more tracks (10) on the road (100). The processing circuitry (602) is further configured to issue a steering instruction to a steering arrangement (50) of the vehicle (1) to apply a turning force to turn the vehicle (1) based on the position of the vehicle (1) with respect to the one or more tracks (10) on the road (100) such that the vehicle (1) steers away from the one or more tracks (10).

## Description

### TECHNICAL FIELD

The disclosure relates generally to steering assistance of a vehicle. In particular aspects, the disclosure relates to assist in steering a vehicle such that the vehicle is steered away from one or more tracks in a road. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When vehicles travel approximately in the same area of a road, tracks emerge due to increased wear in these areas. This means that the road is unevenly worn down which may cause a shorter lifespan for the road.

Furthermore, cold tires are sources of increased energy or fuel consumption for vehicles. Tires warm up during longer driving but are cooled down if driving on wet roads. Warmer tires mean less rolling resistance. If driving mainly on the least wet part of the road a considerable amount of energy could be saved. Since vehicles tend to drive in the same area of the road, tracks may emerge. When the road is wet, water will gather in said tracks meaning that a normal driving behaviour will cool down tires of vehicles driving in said road, which increase fuel or energy consumption of the vehicle.

Furthermore, driving in tracks when there is snow, mud, or other low friction surface may further reduce control of the vehicle.

Hence, there is a need to improve efficiency of vehicle operations.

### SUMMARY

According to a first aspect of the disclosure, a computer system comprising processing circuitry configured to assist in steering a vehicle travelling on a road is provided.

The processing circuitry is further configured to obtain, as measured by one or more sensors of the vehicle, an indication of one or more tracks on the road.

The processing circuitry is further configured to obtain a position of the vehicle with respect to the one or more tracks on the road.

The processing circuitry is further configured to issue a steering instruction to a steering arrangement of the vehicle to apply a turning force to turn the vehicle based on the position of the vehicle with respect to the one or more tracks on the road such that the vehicle steers away from the one or more tracks.

The first aspect of the disclosure may seek to improve efficiency of vehicle operations. A technical benefit may include improved efficiency of vehicle operations. This is since the vehicle will be steered away from the tracks causing the wheels to not drive directly into wet areas of the tracks when the road is wet, thereby improving fuel and/or energy efficiency as the tires of the vehicle will not be cooled down by water gathered in the one or more tracks. Furthermore, the vehicle will have improved control when the road is snowy or muddy since the tires will not be guided by the tracks and the vehicle can instead control the tires more efficiently. Furthermore, the road wear of the road will be more even, meaning that it can serve the vehicle for a longer period of time and will not form as many tracks, thus improving efficiency in vehicle operations due to having no tracks, or at least a lower number of tracks in the road.

Optionally in some examples, including in at least one preferred example, applying the turning force comprises applying a corresponding force to a steering wheel of the vehicle.

A technical benefit may include improved efficiency of operating the vehicle. This is since the force may be a force nudging the steering of a operator such that the wheels of the vehicle will not drive in the one or more tracks. This allows for efficient steering control by the operator but still will ensure that a natural operation of the vehicle is to not travel with its wheels in the one or more tracks. This will further ensure that the wheels will not travel in the tracks, thereby reducing chance of cooling them down if the road is wet and there is water gathering in the one or more tracks.

Optionally in some examples, including in at least one preferred example, applying the turning force comprises adjusting a turning force of an automated steering system to account for the turning force.

A technical benefit may include improved efficiency of operating the vehicle. This is since automated steering systems of vehicles otherwise will ensure that the vehicle travels with its wheels almost exactly in the same position, thereby increasingly creating more tracks in the road. In this way, the vehicle, when operating with the automated steering system will not create more tracks and also will ensure that the wheels will not travel in the tracks, thereby reducing chance of cooling them down if the road is wet and there is water gathering in the one or more tracks.

Optionally in some examples, including in at least one preferred example, the one or more tracks comprises respective edges. In some of these examples, the steering instruction indicates to apply the steering force such that wheels of the vehicle is steered towards at least one of the respective edges.

A technical benefit may include improved efficiency of operating the vehicle. This is since the wheels of the vehicle will be steered towards the respective edges, thereby aligning with the edges or at least travelling towards the edges. This means that the one or more tracks will reduce over time as the edges will smoothen out the tracks. Furthermore, the edges will not have water cooling down the tires, thereby fuel and energy efficiency is maintained when travelling on the respective edges with the wheels of the vehicle.

Optionally in some examples, including in at least one preferred example, the processing circuitry is further configured to maintain a trajectory of the vehicle such that wheels of the vehicle is maintained within an interval from a center of the one or more tracks.

A technical benefit may include improved efficiency of operating the vehicle. This is since road wear is improved and evened out, and that the wheels of the vehicle will not travel on the center of the one or more tracks where water may gather, thereby fuel and energy efficiency is maintained since the temperature of tires of the wheels can be maintained.

Optionally in some examples, including in at least one preferred example, the processing circuitry is further configured to maintain a trajectory of the vehicle such that wheels of the vehicle aligns with an edge of the one or more tracks.

A technical benefit may include improved efficiency of operating the vehicle. This is since road wear will improve as the one or more tracks will reduce over time since travelling aligned with the edges will smoothen out the one or more tracks. Furthermore, the edges will not have water cooling down the tires, thereby fuel and energy efficiency is maintained when travelling aligned with the edge.

Optionally in some examples, including in at least one preferred example, when wheels of the vehicle is positioned in the one or more tracks, the steering instruction indicates to apply the steering force such that the vehicle is steered away from a respective center of the one or more tracks, and towards the edge of the one or more tracks.

A technical benefit may include improved efficiency of operating the vehicle. This is since road wear will improve as the one or more tracks will reduce over time since travelling on the edges will smoothen out the one or more tracks. Furthermore, the edges will not have water cooling down the tires of the wheels, thereby fuel and energy efficiency is maintained when travelling aligned with the edge.

Optionally in some examples, including in at least one preferred example, the processing circuitry is further configured to obtain a surface condition of the one or more tracks, and wherein the steering instruction indicates to apply the turning force by adjusting a vehicle longitudinal motion based on the surface condition.

A technical benefit may include improved efficiency of operating the vehicle. This is since when the surface condition is slippery or has low friction, turning the vehicle, in particular if the one or more tracks are deep, may be associated with a hazard if travelling at high speeds as the vehicle may be difficult to control due to being guided by the one or more tracks in combination with slippery surface. Therefore, when reducing the speed the vehicle may more easily be controlled and may more easily steer away from the one or more tracks.

Optionally in some examples, including in at least one preferred example, obtaining the indication of the one or more tracks on the road is based on the one or more sensors measuring wetness, ice, and/or snow on the road.

A technical benefit may include improved efficiency of operating the vehicle. This is since the wheels of the vehicle can more accurately avoid travelling in the one or more tracks.

According to a second aspect of the disclosure, a vehicle comprising and/or being controlled by the computer system according to the first aspect is provided.

According to a third aspect of the disclosure, a computer-implemented method for assisting in steering a vehicle travelling on a road is provided.

The method comprises, by processing circuitry of a computer system, obtaining as measured by one or more sensors of the vehicle, an indication of one or more tracks on the road.

The method comprises, by the processing circuitry, obtaining a position of the vehicle with respect to the one or more tracks on the road.

The method comprises, by the processing circuitry, issuing a steering instruction to a steering arrangement of the vehicle to apply a turning force to turn the vehicle based on the position of the vehicle with respect to the one or more tracks on the road such that the vehicle steers away from the one or more tracks.

Optionally in some examples, including in at least one preferred example, applying the turning force comprises applying a corresponding force to a steering wheel of the vehicle.

Optionally in some examples, including in at least one preferred example, applying the turning force comprises adjusting a turning force of an automated steering system to account for the turning force.

Optionally in some examples, including in at least one preferred example, the one or more tracks comprises respective edges. In these examples, the steering instruction may indicate to apply the steering force such that wheels of the vehicle is steered towards at least one of the respective edges.

Optionally in some examples, including in at least one preferred example, the method comprises maintaining a trajectory of the vehicle such that wheels of the vehicle is maintained within an interval from a center of the one or more tracks.

Optionally in some examples, including in at least one preferred example, the method comprises maintaining a trajectory of the vehicle such that wheels of the vehicle aligns with an edge of the one or more tracks.

Optionally in some examples, including in at least one preferred example, when wheels of the vehicle is positioned in the one or more tracks, the steering instruction indicates to apply the steering force such that the vehicle is steered away from a respective center of the one or more tracks, and towards the edge of the one or more tracks.

Optionally in some examples, including in at least one preferred example, the method further comprises obtaining a surface condition of the one or more tracks, and wherein the steering instruction indicates to apply the turning force by adjusting a vehicle longitudinal motion based on the surface condition.

The second and third aspects may correspond to any of the features, examples, and/or benefits of the first aspect and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary vehicle according to an example.
**FIG. 2a****-c** area exemplary block diagrams illustrating example scenarios.
**FIG. 3** is a flow chart of an exemplary according to an example.
**FIG. 4** is another view of **FIG. 1**, according to an example.
**FIG. 5** is a flow chart of an exemplary according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to improving vehicle operations by ensuring that wheels of a vehicle is steered away from one or more tracks on a road. This may avoid tires of the vehicle cooling down when water is formed in the one or more tracks which thereby improves or at least maintains fuel and/or energy efficiency. Furthermore, this allows road wear to be improved as less tracks will be formed and the road wear will be evened out.

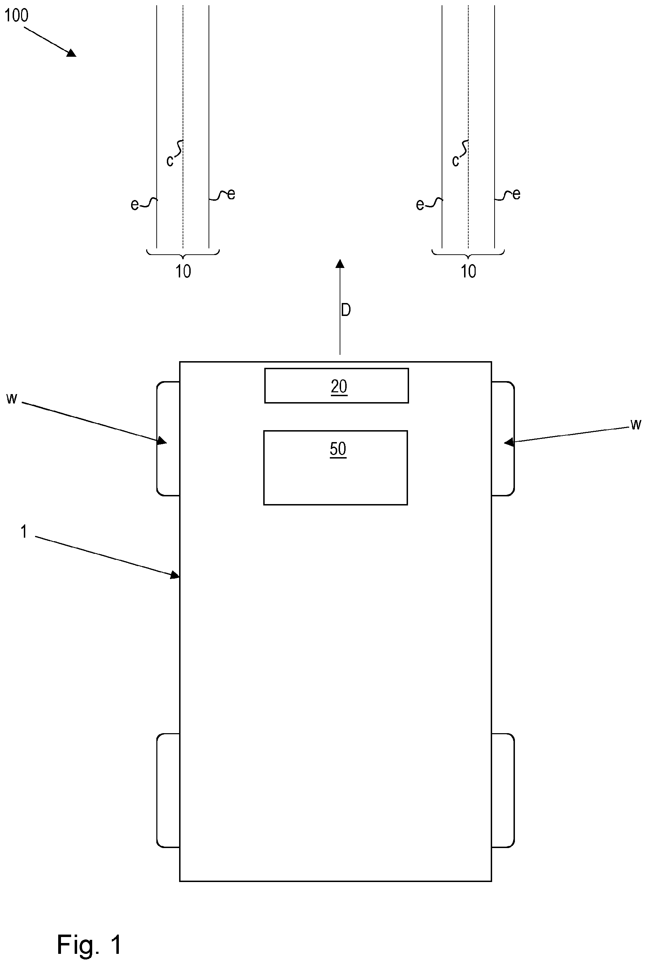

**FIG. 1** illustrates an exemplary **vehicle 1** according to an example.

The vehicle 1 may be any suitable vehicle, e.g., any one out of a car, a vehicle combination, a truck, a bus, and a heavy-duty vehicle.

The vehicle 1 may comprises a number of **wheels w,** each comprising a tire.

The vehicle 1 travels on a **road 100.**

Due to excessive wear by vehicles travelling in the same area of the road 100, **one or more tracks 10** have been formed on the road 100. The one or more tracks 10 may be wheel tracks and may be associated with a set depth. In the one or more tracks 10, water or other liquids may gather after rain or spill such that when the wheels w of the vehicle 1 travel in the one or more tracks 10, the tires of the wheels w will cool down, thereby causing increased fuel and/or energy consumption of the vehicle 1. The one or more tracks 10 may extend in a longitudinal direction of the road 100, i.e. the one or more tracks 10 extend along the road 100 and not across the road 100.

The vehicle 1 may travel in a **travel direction D.** Examples herein may try to ensure that the travel direction D is at least influenced such that the vehicle 1 steers away from the one or more tracks 10.

The one or more tracks 10 may comprise a respective **center c** and may comprise respective **edges e.**

The one or more tracks 10 may comprise a respective depth due to excessive road wear. The depth may be measured as a distance below an average road surface of the road 100.

The center c of the respective track may in some examples be associated with the highest / deepest depth of the respective track.

The respective edges e may be where a depth of the road 100 is below a threshold. In other words, the edges e may be the first place of the respective track where a change in depth can be detected with respect to the rest of the road 100.

The vehicle 1 may comprise **one or more sensors 20** arranged for measuring the one or more tracks 10.

For example, the one or more sensors may comprise cameras or other sensors which measures the one or more tracks 10, e.g., and may be used for detecting the respective edges e and/or the respective centers c.

The respective edges e may further be defined by how the one or more sensors 20 measures and detects the one or more tracks 10, e.g., wherein the respective edges e may define a width of the detected respective tracks.

The vehicle 1 comprises a **steering arrangement 50.** The steering arrangement 50 may comprise any suitable steering equipment, e.g., steering wheel and/or automated steering systems. That the steering arrangement 50 may be capable of being issued steering instructions which can apply a turning force to the vehicle 1, e.g., for nudging the vehicle 1 into steering away from the one or more tracks 10. Nudging as used herein means a small force, non-zero but less than a set threshold. The turning force may be applied in addition to other steering forces by the vehicle 1 and/or the steering arrangement 50 and may be applied to the vehicle 1 as a whole, the wheels w, to an automated steering system of the vehicle 1, to a steering wheel of the vehicle 1, or a combination thereof, such that there is at least a small force imposed on the vehicle 1 for assisting the steering of the vehicle 1 away from the one or more tracks 10.

Examples herein may be performed by a **computer system 600** and/or a **processing circuitry 602** therein.

The computer system 600 and/or the processing circuitry 602 therein may be comprised in the vehicle 1 and/or remote to the vehicle 1 such as part of a server or cloud service.

In some examples, the computer system 600 and/or the processing circuitry 602 may be or may comprises an Electronic Control Unit (ECU) for controlling the vehicle 1.

In some examples, the computer system 600 and/or the processing circuitry 602 therein may be communicatively coupled with, and/or capable of controlling any suitable entity of the vehicle 1. For example, the computer system 600 and/or the processing circuitry 602 may be able to obtain information about the one or more tracks 10 and/or sensor data to be used for establishing the one or more tracks 10, such as received from the one or more sensors 20. As another example, the computer system 600 and/or the processing circuitry 602 may be able to control the steering arrangement 50, e.g., by issuing steering instructions to said steering arrangement 50.

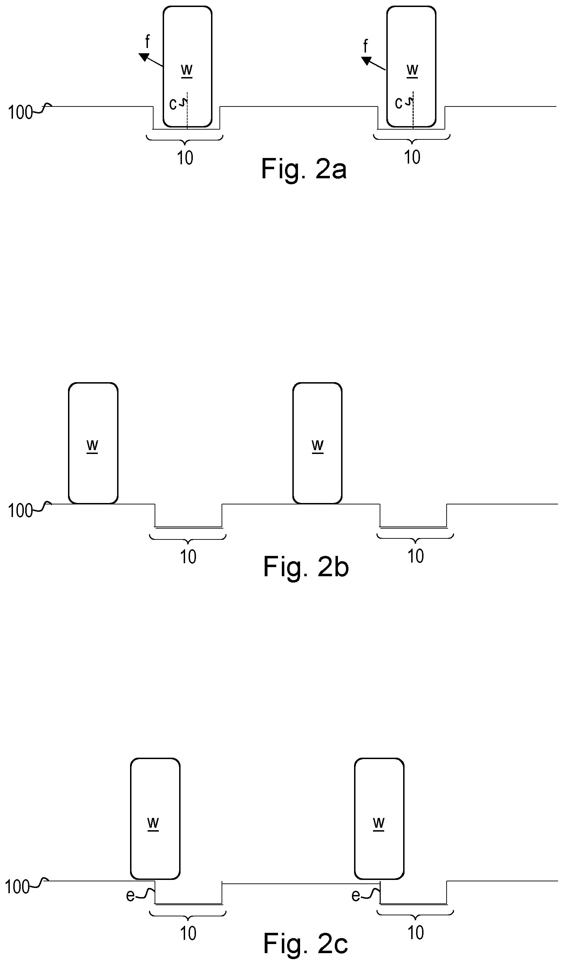

**FIG. 2a****-c** illustrates examples of the one or more tracks.

In the example scenario of FIG. 2a, the wheels w of the vehicle 1 is travelling on the road 100 such that both wheels w are travelling within respective two of the one or more track 10 aligned with the center c of the respective tracks. This manner of travelling the road 100 may be seen as a typical manner of travelling the road 100 since the tracks have been formed around the respective center c and a vehicle naturally may align with the respective tracks unless explicitly steered away. In examples herein, a turning force is applied to the vehicle 1, to turn the vehicle 1 based on the position of the vehicle 1 with respect to the one or more tracks 10 on the road 100, such that the vehicle 1 steers away from the one or more tracks 10. In FIG. 2a, the turning force is indicated as a force f on the wheels w, away from the center of the respective one or more tracks 10.

In the example scenario of **FIG. 2b****,** the wheels w of the vehicle 1 is travelling on the road 100 such that both wheels w have been steered away from the one or more tracks 10, thereby the wheels w have less risk of being wet and subsequently cooled down when the one or more tracks 10 are water-filled. Furthermore, road wear is evened out over the road 100 since the one or more tracks 10 are not travelled by the vehicle 1.

In the example scenario of **FIG. 2c****,** the wheels w of the vehicle 1 is travelling on the road 100 such that both wheels w are traveling on respective edges e of the one or more tracks 10. In this way, the wheels w have less risk of being wet and subsequently cooled down when the one or more tracks 10 are water-filled. Furthermore, road wear is evened out over the road 100 since travelling on the edges e will cause the one or more tracks 10 to even out as the road wear will occur on the edges e, thereby widening the one or more tracks 10 until they are evened out completely, or at least not detectable by the one or more sensors 20.

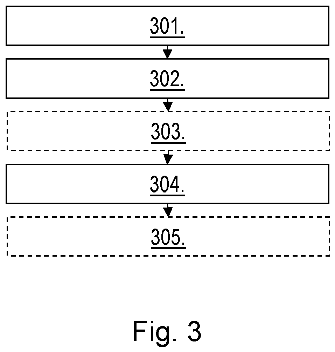

**FIG. 3** is an exemplary flow chart of a computer-implemented method for assisting in steering the vehicle 1 travelling on the road 100. Dashed boxes in FIG. 3 may indicate optional actions. The below actions may be taken in any suitable order. The actions described below may be performed by the computer system 600 and/or the processing circuitry 602 therein.

### Action 301

The method comprises obtaining, as measured by the one or more sensors 20 of the vehicle 1, an indication of one or more tracks 10 on the road 100. The one or more sensors 20 may therefor dynamically obtain the one or more tracks 10, e.g., as seen by a camera or other suitable sensor of the one or more sensors 20. Obtaining the one or more tracks 10 may comprise obtaining the sensor data as received from the one or more sensors 20 and processing the sensor data to obtain the indication of the one or more tracks, e.g., according to any suitable track establishment model. The one or more tracks 10 may be wheel tracks, e.g., formed by wear on the road 100.

In some examples, obtaining the indication of the one or more tracks 10 on the road 100 is based on the one or more sensors measuring wetness, ice, and/or snow on the road 100. For example, the one or more sensors 20 may measure wheel tracks in the snow, or may observe water formed as wheel tracks in the road 100 and use said observations as a basis for establishing the indication of the one or more tracks 10.

### Action 302

The method comprises obtaining a position of the vehicle 1 with respect to the one or more tracks 10 on the road 100. The position may be absolute or relative, as long as it is possible to relate the position of the vehicle 1 with the one or more tracks 10. The position of the vehicle 1 may comprise position of the wheels w of the vehicle 1. Alternatively, the position of the wheels w of the vehicle 1 may be directly derived from the position of the vehicle 1 due to a predefined model of how the wheels w are positioned within the vehicle 1.

The position may be obtained by any suitable sensors, e.g., global positioning systems (GPS), or may be obtained by means of measuring the one or more tracks 10, e.g., as in action 301, and using a predefined model to calculate the relative position of the vehicle 1 and/or the wheels w.

### Action 303

The method may comprise obtaining a surface condition of the one or more tracks 10. Obtaining the surface condition may be performed in combination with actions 301-302, e.g., by use of a camera. The surface condition may comprise a friction of the road 100 and/or the one or more tracks 10 . The surface condition may comprise information of wetness, ice, snow, mud, or a combination thereof, on the road 100 and/or the one or more tracks 10.

### Action 304

The method comprises issuing a steering instruction to a steering arrangement 50 of the vehicle 1 to apply a turning force to turn the vehicle 1 based on the position of the vehicle 1 with respect to the one or more tracks 10 on the road 100 such that the vehicle 1 steers away from the one or more tracks 10.

The turning force may be non-zero, in any suitable direction, but may be below a set threshold. The turning force may be configurable based on the surface conditions of the road 100, the motion of the vehicle 1, and/or based on heuristics and/or a predefined model.

In some examples, applying the turning force comprises applying a corresponding force to a steering wheel of the vehicle 1. In other words, an operator of the vehicle 1 may feel the turning force in the steering wheel, acting similar to a lane assist system which is intended to nudge the vehicle 1 to steer away from the one or more tracks 10, but if the operator decides to keep the steering wheel straight, then the vehicle 1 can continue travelling in the one or more tracks 10.

In some examples, applying the turning force comprises adjusting a turning force of an automated steering system to account for the turning force. In other words, the automated steering system may have a set steering for the vehicle 1, and the turning force will be accounted for such that the steering of the vehicle 1 can behave as normal but with the addition of turning away from the one or more tracks 10. For example, the turning force may be a set parameter added to a steering parameter of the automated steering system, e.g., according to a predefined steering model. The automated steering system may be the automated steering system of the steering arrangement 50.

In some examples, the one or more tracks 10 comprises respective edges e, e.g., as detected by the one or more sensors 20 . In these examples, the steering instruction may indicate to apply the steering force such that wheels w of the vehicle 1 is steered towards at least one of the respective edges e.

In some examples, when wheels w of the vehicle 1 is positioned in the one or more tracks 10, e.g., in the respective center c of the one or more tracks 10, the steering instruction may indicate to apply the steering force such that the vehicle 1 is steered away from the respective center c of the one or more tracks 10, and towards the edge e of the one or more tracks 10.

In other words, the wheels w may be steered away from the respective center c, and towards the respective edges e, or also away from the respective edges e to move the vehicle 1 away from the one or more tracks 10 as a whole.

In some examples, the steering instruction indicates to apply the turning force by adjusting a vehicle 1 longitudinal motion based on the surface condition. For example, when the surface condition is slippery and/or comprises deep tracks guiding the wheels w of the vehicle 1 it may be dangerous and/or difficult to control the vehicle 1 if travelling at high speeds in the one or more tracks 10. This is particularly the case for snowy and/or icy roads where the one or more tracks 10 where the wheels w may easily slide along and/or within the one or more tracks 10.

### Action 305

The method may comprise maintaining a trajectory of the vehicle 1, e.g., after steering the vehicle 1 away from the one or more tracks 10. This means that the road wear of the road 100 will even out and the tires of the wheels w will further remain out of the tracks such that they will not be cooled down when the one or more tracks 10 is filled with water. Furthermore, more control of the vehicle 1 is achieved when driving outside of the one or more tracks 10, in particular when the surface condition is snowy or muddy, or otherwise prone to guide the wheels w when travelling in the one or more tracks 10.
The trajectory may be maintained such that the wheels w of the vehicle 1 is maintained within an interval from a center c of the one or more tracks 10.

Additionally or alternatively, the trajectory of the vehicle 1 may be maintained such that the wheels w of the vehicle 1 aligns with an edge of the one or more tracks 10, e.g., one of the edges e as illustrated in FIG. 2c.

Additionally or alternatively, the trajectory of the vehicle 1 may be maintained such that the wheels w of the vehicle 1 is maintained at a minimum distance away from the one or more tracks 10, e.g., a minimum distance away from any part of the one or more track 10 such as the respective edges e.

### Further Examples and variations

The one or more sensors 20 of the vehicle 1 may comprise one or more sensors configured to scan the road 100 as a foundation for different safety systems. Lane keeping aid is one such system using such sensors. With these sensors a model of a cross-section of the road 100 may be established, e.g., as part of action 301, and it may be possible to further receive information on where the one or more wheel tracks 10 are located, e.g., as discussed above.

With the information of where the road 100 is at its higher and lower points, i.e., the information of the one or more tacks 10, it may be possible to use a dynamic steering unit, e.g., as part of the steering arrangement 50, a task to lead the wheels w of the vehicle 1 to a highest part of the road, i.e., away from the one or more wheel tracks 10, e.g., as in action 304. Such an action may be seen as similar to nudging done today for a lane keeping aid function. In other words, the vehicle 1 may be steered away from the one or more tracks 10 in a manner corresponding to how the vehicle 1 is steered to or from lanes using the lane keeping aid function.

A torque request towards the steering arrangement 50, e.g., the steering wheel, may serve as an automatic nudging out of the one or more wheel tracks 10 to avoid constantly wet tires thereby improving fuel and/or energy efficiency of the vehicle 1.

For autonomous vehicles the examples above may be even further beneficial. A stronger nudging, i.e., turning force, may possibly be accepted and thereby keeping the tires out of the one or more wheel tracks 10 for a larger part of the time or all the time, hence making the tires stay even warmer compared to a truck without such a system.

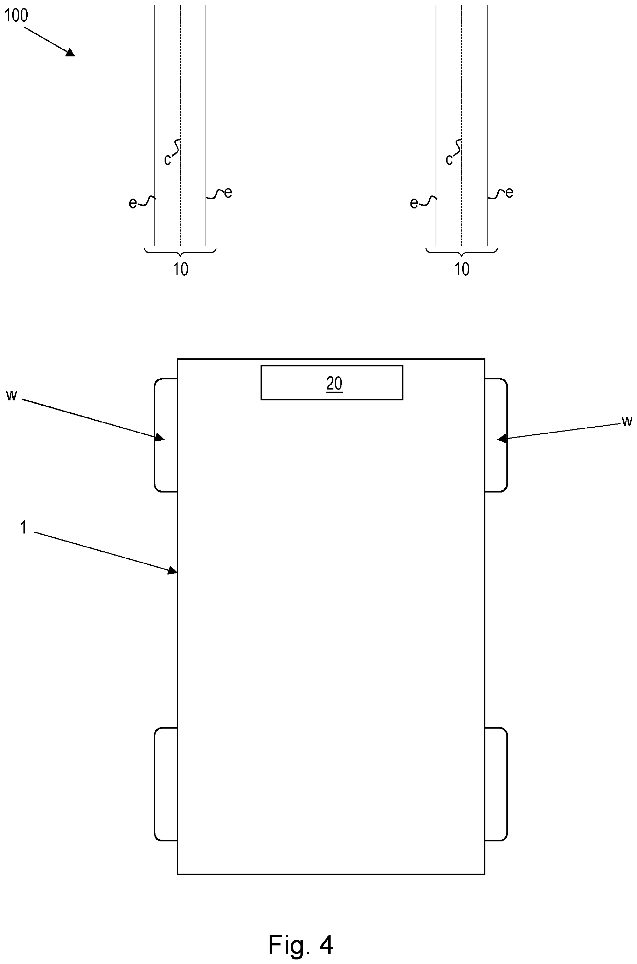

**FIG. 4** is another view of FIG. 1, according to an example. The computer system. 600 comprising the processing circuitry 602 is configured to assist in steering the vehicle 1 travelling on the road 100. The processing circuitry 602 is further configured to obtain as measured by one or more sensors 20 of the vehicle 1, an indication of one or more tracks 10 on the road 100. The processing circuitry 602 is further configured to obtain a position of the vehicle 1 with respect to the one or more tracks 10 on the road 100. The processing circuitry 602 is further configured to issue a steering instruction to a steering arrangement 50 of the vehicle 1 to apply a turning force to turn the vehicle 1 based on the position of the vehicle 1 with respect to the one or more tracks 10 on the road 100 such that the vehicle 1 steers away from the one or more tracks 10.

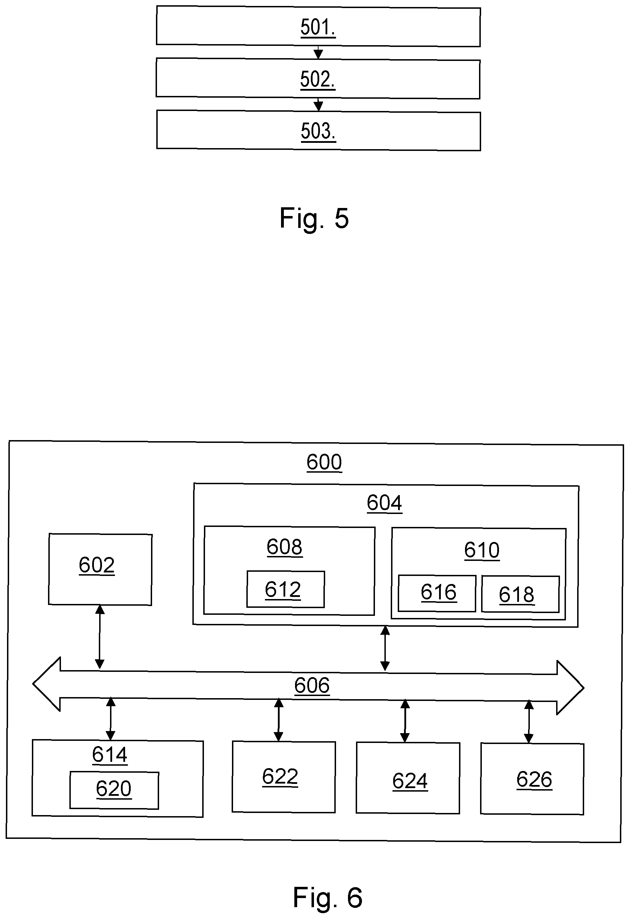

**FIG. 5** is a flow chart of a method for assisting in steering a vehicle 1 travelling on a road 100. The method comprises the following actions which may be combined with any of the above-mentioned actions or examples in any suitable manner.

### Action 501

The method comprises, by the processing circuitry 602 of the computer system 600, obtaining as measured by one or more sensors 20 of the vehicle 1, an indication of one or more tracks 10 on the road 100.

### Action 502

The method comprises, by the processing circuitry 602, obtaining a position of the vehicle 1 with respect to the one or more tracks 10 on the road 100.

### Action 503

The method comprises, by the processing circuitry 602, issuing a steering instruction to a steering arrangement 50 of the vehicle 1 to apply a turning force to turn the vehicle 1 based on the position of the vehicle 1 with respect to the one or more tracks 10 on the road 100 such that the vehicle 1 steers away from the one or more tracks 10.

**FIG. 6** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follow a list of Examples 1-20 which may be combined with any one or more out of the above examples or actions, in any suitable manner.
**Example 1.** A computer system 600 comprising processing circuitry 602 configured to assist in steering a vehicle 1 travelling on a road 100, the processing circuitry 602 is further configured to:
   - obtain as measured by one or more sensors 20 of the vehicle 1, an indication of one or more tracks 10 on the road 100,
   - obtain a position of the vehicle 1 with respect to the one or more tracks 10 on the road 100,
   - issue a steering instruction to a steering arrangement 50 of the vehicle 1 to apply a turning force to turn the vehicle 1 based on the position of the vehicle 1 with respect to the one or more tracks 10 on the road 100 such that the vehicle 1 steers away from the one or more tracks 10.
**Example 2.** The computer system 600 of Example 1, wherein applying the turning force comprises applying a corresponding force to a steering wheel of the vehicle 1.
**Example 3.** The computer system 600 of Example 1, wherein applying the turning force comprises adjusting a turning force of an automated steering system to account for the turning force.
**Example 4.** The computer system 600 of any of Examples 1-3, wherein the one or more tracks 10 comprises respective edges e, and wherein the steering instruction indicates to apply the steering force such that wheels w of the vehicle 1 is steered towards at least one of the respective edges e.
**Example 5.** The computer system 600 of any of Examples 1-4, wherein the processing circuitry 602 is further configured to maintain a trajectory of the vehicle 1 such that wheels of the vehicle 1 is maintained within an interval from a center c of the one or more tracks 10.
**Example 6.** The computer system 600 of any of Examples 1-5, wherein the processing circuitry 602 is further configured to maintain a trajectory of the vehicle 1 such that wheels of the vehicle 1 aligns with an edge e of the one or more tracks 10.
**Example 7.** The computer system 600 of Example 6, when wheels w of the vehicle 1 is positioned in the one or more tracks 10, wherein the steering instruction indicates to apply the steering force such that the vehicle 1 is steered away from a respective center c of the one or more tracks 10, and towards the edge e of the one or more tracks 10.
**Example 8.** The computer system 600 of any of Examples 1-7, wherein the processing circuitry 602 is further configured to obtain a surface condition of the one or more tracks 10, and wherein the steering instruction indicates to apply the turning force by adjusting a vehicle 1 longitudinal motion based on the surface condition.
**Example 9.** The computer system 600 of any of Examples 1-8, wherein obtaining the indication of the one or more tracks 10 on the road 100 is based on the one or more sensors measuring wetness, ice, and/or snow on the road 100.
**Example 10.** A vehicle 1 comprising and/or is controlled by the computer system 600 of any of Examples 1-9.
**Example 11.** A computer-implemented method for assisting in steering a vehicle 1 travelling on a road 100, comprising:
   - by processing circuitry 602 of a computer system 600, obtaining 301 as measured by one or more sensors 20 of the vehicle 1, an indication of one or more tracks 10 on the road 100,
   - by the processing circuitry 602, obtaining 302 a position of the vehicle 1 with respect to the one or more tracks 10 on the road 100,
   - by the processing circuitry 602, issuing 304 a steering instruction to a steering arrangement 50 of the vehicle 1 to apply a turning force to turn the vehicle 1 based on the position of the vehicle 1 with respect to the one or more tracks 10 on the road 100 such that the vehicle 1 steers away from the one or more tracks 10.
**Example 12.** The method of Example 11, wherein applying the turning force comprises applying a corresponding force to a steering wheel of the vehicle 1.
**Example 13.** The method of Examples 11 or 12, wherein applying the turning force comprises adjusting a turning force of an automated steering system to account for the turning force.
**Example 14.** The method of any of Examples 11-13, wherein the one or more tracks 10 comprises respective edges e, wherein the steering instruction indicates to apply the steering force such that wheels w of the vehicle 1 is steered towards at least one of the respective edges e.
**Example 15.** The method of any of Examples 11-14, further comprising maintaining 305 a trajectory of the vehicle 1 such that wheels of the vehicle 1 is maintained within an interval from a center c of the one or more tracks 10.
**Example 16.** The method of any of Examples 11-15, further comprising maintaining 305 a trajectory of the vehicle 1 such that wheels of the vehicle 1 aligns with an edge e of the one or more tracks 10.
**Example 17.** The method of any of Examples 11-16, when wheels (w) of the vehicle (1) is positioned in the one or more tracks (10), the steering instruction indicates to apply the steering force such that the vehicle 1 is steered away from a respective center c of the one or more tracks 10, and towards the edge e of the one or more tracks 10.
**Example 18.** The computer system 600 of any of Examples 11-17, wherein the processing circuitry 602 is further configured to obtain a surface condition of the one or more tracks 10, and wherein the steering instruction indicates to apply the turning force by adjusting a vehicle 1 longitudinal motion based on the surface condition.
**Example 19.** A computer program product comprising program code for performing, when executed by the processing circuitry 602, the method of any of Examples 11-18.
**Example 20.** A non-transitory computer-readable storage medium comprising instructions, which when executed by the processing circuitry 602, cause the processing circuitry 602 to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to assist in steering a vehicle (1) travelling on a road (100), the processing circuitry (602) is further configured to:
- obtain as measured by one or more sensors (20) of the vehicle (1), an indication of one or more tracks (10) on the road (100),
- obtain a position of the vehicle (1) with respect to the one or more tracks (10) on the road (100),
- issue a steering instruction to a steering arrangement (50) of the vehicle (1) to apply a turning force to turn the vehicle (1) based on the position of the vehicle (1) with respect to the one or more tracks (10) on the road (100) such that the vehicle (1) steers away from the one or more tracks (10).

2. The computer system (600) of claim 1, wherein applying the turning force comprises applying a corresponding force to a steering wheel of the vehicle (1).

3. The computer system (600) of claim 1, wherein applying the turning force comprises adjusting a turning force of an automated steering system to account for the turning force.

4. The computer system (600) of any of claims 1-3, wherein the one or more tracks (10) comprises respective edges (e), and wherein the steering instruction indicates to apply the steering force such that wheels (w) of the vehicle (1) is steered towards at least one of the respective edges (e).

5. The computer system (600) of any of claims 1-4, wherein the processing circuitry (602) is further configured to maintain a trajectory of the vehicle (1) such that wheels of the vehicle (1) is maintained within an interval from a center (c) of the one or more tracks (10).

6. The computer system (600) of any of claims 1-5, wherein the processing circuitry (602) is further configured to maintain a trajectory of the vehicle (1) such that wheels of the vehicle (1) aligns with an edge (e) of the one or more tracks (10).

7. The computer system (600) of claim 6, when wheels (w) of the vehicle (1) is positioned in the one or more tracks (10), the steering instruction indicates to apply the steering force such that the vehicle (1) is steered away from a respective center (c) of the one or more tracks (10), and towards the edge (e) of the one or more tracks (10).

8. The computer system (600) of any of claims 1-7, wherein the processing circuitry (602) is further configured to obtain a surface condition of the one or more tracks (10), and wherein the steering instruction indicates to apply the turning force by adjusting a vehicle (1) longitudinal motion based on the surface condition.

9. The computer system (600) of any of claims 1-8, wherein obtaining the indication of the one or more tracks (10) on the road (100) is based on the one or more sensors measuring wetness, ice, and/or snow on the road (100).

10. A vehicle (1) comprising and/or is controlled by the computer system (600) of any of claims 1-9.

11. A computer-implemented method for assisting in steering a vehicle (1) travelling on a road (100), comprising:
by processing circuitry (602) of a computer system (600), obtaining (301, 501) as measured by one or more sensors (20) of the vehicle (1), an indication of one or more tracks (10) on the road (100),
by the processing circuitry (602), obtaining (302, 502) a position of the vehicle (1) with respect to the one or more tracks (10) on the road (100),
by the processing circuitry (602), issuing (304, 503) a steering instruction to a steering arrangement (50) of the vehicle (1) to apply a turning force to turn the vehicle (1) based on the position of the vehicle (1) with respect to the one or more tracks (10) on the road (100) such that the vehicle (1) steers away from the one or more tracks (10).

12. The method of claim 11, wherein applying the turning force comprises applying a corresponding force to a steering wheel of the vehicle (1).

13. The computer system (600) of any of claims 11-12, wherein the method further comprises obtaining (303) a surface condition of the one or more tracks (10), and wherein the steering instruction indicates to apply the turning force by adjusting a vehicle (1) longitudinal motion based on the surface condition.

14. A computer program product comprising program code for performing, when executed by the processing circuitry (602), the method of any of claims 11-13.

15. A non-transitory computer-readable storage medium comprising instructions, which when executed by the processing circuitry (602), cause the processing circuitry (602) to perform the method of any of claims 11-13.
